# EUROPÄISCHE PATENTANMELDUNG

(11) **EP 1 453 218 A1**
(43) Veröffentlichungstag der Anmeldung: **01.09.2004**
(21) Anmeldenummer: 03005115.5
(22) Anmeldetag: 07.03.2003
(51) Int. Cl.: H04B 1/707

(54) **Verfahren zur Auswertung von Signalen in einer Empfangsstation eines Funksystems und Empfangsstation**

(30) Priorität: 28.02.2003 DE 10309163
(71) Anmelder: SIEMENS AKTIENGESELLSCHAFT, 80333 München (DE)
(72) Erfinder: Dieterich, Hans, Dr., 89075 Ulm (DE); Frey, Thomas, Dr., 89081 Ulm (DE); Schmid, Joachim, 89597 Munderkingen (DE); Schreyögg, Christoph, Dr., 89073 Ulm (DE)

(57) **Zusammenfassung**

Bei dem erfindungsgemäßen Verfahren zur Auswertung von Signalen (S1, S2, S3) in einer Empfangsstation (BS) eines Funksystems, empfängt die Empfangsstation (BS) die Signale (S1, S2) zeitlich überlappend von wenigstens einer ersten und einer zweiten Sendestation (MS1, MS2), wobei die Signale (S1, S2, S3) der Sendestationen (MS1, MS2, MS3) sich durch unterschiedliche Codes (C1, C2, C3) unterscheiden. In der Empfangsstation (BS) werden wenigstens einem Korrelator (K1) die Signale (S1) der ersten Sendestation (MS1) zugeordnet, die der Korrelator (K1) mit dem Code (C1) der ersten Sendestation (MS1) unter Verwendung einer bestimmten Verzögerungszeit korreliert. Der Korrelator (K1) wird dann für die Durchführung einer weiteren Korrelation den Signalen (S2) der zweiten Sendestation (MS2) zugeordnet und/oder die vom Korrelator (K1) verwendete Verzögerungszeit wird geändert, während weiterhin die Signale (S1) der ersten Sendestation (MS1) empfangen werden.

## Beschreibung

Die Erfindung betrifft ein Verfahren zur Auswertung von Signalen in einer Empfangsstation eines Funksystems sowie eine entsprechende Empfangsstation.

In Mobilfunksystemen, die als CDMA-System (Code Division Multiple Access) realisiert sind, ist ein zentraler Aspekt beim Empfang von Teilnehmersignalen das Dekodieren der Teilnehmersignale in einer Basisstation. Bevor Teilnehmersignale in der Basisstation unter Verwendung eines teilnehmerspezifischen Codes dekodiert werden können, müssen zunächst die Verzögerungszeiten aller wesentlichen Ausbreitungspfade des Funkkanals ermittelt werden. Die wesentlichen Ausbreitungspfade des Funkkanals ergeben sich aus einer Schätzung eines Leistungsverzögerungsprofils.

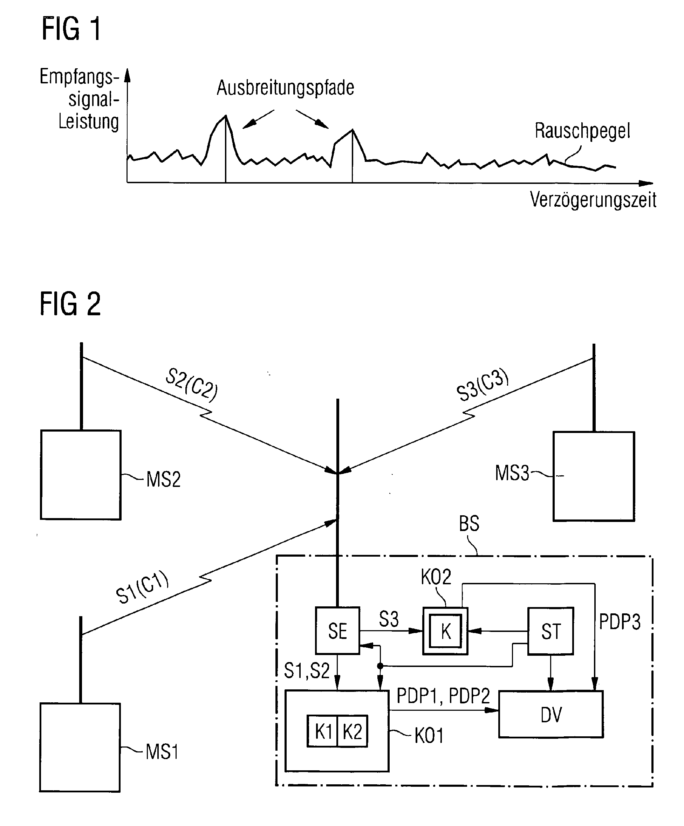

In einem Leistungsverzögerungsprofil (engl.: power delay profile) wird die empfangene Signalleistung als Funktion der Verzögerungszeit aufgetragen. Ein Beispiel für ein geschätztes Leistungsverzögerungsprofil mit zwei wesentlichen Ausbreitungspfaden ist in Figur 1 dargestellt. Zur Schätzung eines Leistungsverzögerungsprofils für ein Teilnehmersignal werden in einem System nach dem FDD-UMTS-Standard (FDD: Frequency Division Duplex, UMTS: Universal Mobile Telecommunications System) die von der Basisstation auf dem DPCCH (Dedicated Physical Control Channel) empfangenen Symbole dieses Teilnehmersignals verwendet. Für jeden Messwert eines Leistungsverzögerungsprofils wird ein empfangenes Symbol mit dem um die entsprechende Verzögerungszeit verschobenen teilnehmerspezifischen Code multipliziert, d. h. korreliert, und die Empfangsleistung des multiplizierten Signals bestimmt. Hat ein teilnehmerspezifischer Code beispielsweise eine Länge von 256 Chips, so könnten die betrachteten Verzögerungszeiten beispielsweise ganzzahlige Vielfache eines Chips sein, so dass das Leistungsverzögerungsprofil aus bis zu 256 Messwerten bestehen würde.

Eine Basisstation, die gleichzeitig K Teilnehmer und L Empfangsantennen pro Sektor unterstützt, muss pro Teilnehmer und Antenne jeweils ein Leistungsverzögerungsprofil mit M Verzögerungszeiten berechnen. Im Fall eines Softer Handover sind es sogar pro Teilnehmer 2*L bzw. 3*L Empfangsantennen, für die ein Leistungsverzögerungsprofil zu berechnen ist. Daraus resultiert ein sehr hoher Rechenaufwand, der nur durch eine große Anzahl von spezialisierten Hardwarebausteinen bewältigt werden kann. Für K = 128 Teilnehmer, L = 2 Antennen und M = 256 Verzögerungszeiten, wobei sich 15% der Teilnehmer im Softer Handover befinden, d. h. 2*L Antennen verwenden, sind beispielsweise 75366 Korrelatoren nötig, um alle Leistungsverzögerungsprofile gleichzeitig zu erstellen. Jeweils ein Korrelator dient dabei zur Ermittlung eines Messwertes eines Leistungsverzögerungsprofils.

Der Erfindung liegt daher die Aufgabe zugrunde, ein verbessertes Verfahren zur Durchführung von Korrelationen anzugeben, das mit einer reduzierten Anzahl von Korrelatoren auskommt.

Diese Aufgabe wird mit dem Verfahren gemäß Anspruch 1 sowie der Empfangsstation gemäß dem nebengeordneten Anspruch gelöst.

Vorteilhafte Aus- und Weiterbildungen der Erfindung sind Gegenstand der abhängigen Ansprüche.

Bei dem erfindungsgemäßen Verfahren zur Auswertung von Signalen in einer Empfangsstation eines Funksystems, empfängt die Empfangsstation die Signale zeitlich überlappend von wenigstens einer ersten und einer zweiten Sendestation, wobei die Signale der Sendestationen sich durch unterschiedliche Codes unterscheiden. In der Empfangsstation werden wenigstens einem Korrelator die Signale der ersten Sendestation zugeordnet, die der Korrelator mit dem Code der ersten Sendestation unter Verwendung einer bestimmten Verzögerungszeit korreliert. Der Korrelator wird dann für die Durchführung einer weiteren Korrelation den Signalen der zweiten Sendestation zugeordnet und/oder die vom Korrelator verwendete Verzögerungszeit wird geändert, während weiterhin die Signale der ersten Sendestation empfangen werden.

Mehrere Sendestationen können sich beispielsweise einen Korrelator im Zeitmultiplex teilen. Während in bisher üblichen Verfahren jede gleichzeitig mit anderen Sendestationen sendende Sendestation über individuell zugewiesene Korrelatoren verfügt, verwenden gemäß der Erfindung wenigstens zwei Sendestationen zumindest teilweise die gleichen Korrelatoren. Beide Sendestationen senden gleichzeitig und ununterbrochen. Die Korrelationen, die ein Korrelator durchführt, erfolgen jedoch für jede Sendestation nur während der Zeitintervalle, in denen der Korrelator der jeweiligen Sendestation zugewiesen ist. Auf diese Weise werden erfindungsgemäß weniger Korrelatoren in der Empfangsstation benötigt, als dies bisher der Fall war.

Vorteilhaft ist es, wenn mehrere Korrelationen für die Signale wenigstens einer der Sendestationen innerhalb eines vorgegebenen Zeitraumes durchgeführt werden und die Anzahl an Korrelationen von der Geschwindigkeit der Sendestation und/oder dem Frequenzunterschied zwischen der Sendestation und der Empfangsstation abhängt.

Je schneller sich eine Sendestation bewegt, um so schneller ändern sich die Ausbreitungsbedingungen der Signale der Sendestation. Damit eine Empfangsstation über die aktuellen Ausbreitungsbedingungen der Signale einer Sendestation ausreichend informiert ist, d. h. die Verzögerungszeiten des von der Sendestation verwendeten Codes für die wesentlichen Ausbreitungswege kennt, sind für Sendestationen mit hohen Geschwindigkeiten viele Korrelationen innerhalb eines Zeitraumes nötig, während für Sendestationen mit einer geringen Geschwindigkeit weniger Korrelationen innerhalb des gleichen Zeitraumes benötigt werden.

In einer Sendestation, deren Frequenz stark von der Frequenz einer Empfangsstation abweicht (beispielsweise einige 10 bis 100 Hertz), besteht eine nicht zu vernachlässigende Abweichung der Zeitdauer der einzelnen Chips des Codes der Sendestation von der entsprechenden Zeitdauer in der Empfangsstation. Das Ergebnis einer Korrelation eines Signals einer Sendestation für eine bestimmte Verzögerungszeit ändert sich daher für eine Sendestation mit großem Frequenzunterschied (Frequenzoffset) zeitlich schneller als für eine Sendestation mit kleinem bzw. keinem Frequenzunterschied. Eine Sendestation mit großem Frequenzunterschied benötigt somit mehr Korrelationen innerhalb eines Zeitraumes als eine Sendestation mit einem kleinen bzw. keinem Frequenzunterschied.

Zweckmäßigerweise wird zur Festlegung der Anzahl an Korrelationen innerhalb des vorgegebenen Zeitraumes eine Anzahl an Korrelatoren festgelegt, denen die Signale der Sendestation zugeordnet werden.

Zusätzlich oder alternativ wird zur Festlegung der Anzahl an Korrelationen innerhalb des vorgegebenen Zeitraumes der zeitliche Abstand zwischen Korrelationen festgelegt, die ein Korrelator für die Signale der Sendestation durchführt.

In einer bevorzugten Ausgestaltung der Erfindung werden mehrere Korrelatoren verwendet und die zeitlich überlappend empfangenen Signale der Sendestationen gespeichert und den Korrelatoren synchron zugeführt.

Da die Signale der Sendestationen von der Empfangsstation nicht synchron empfangen werden, ist es besonders günstig, wenn eine Einheit, die die Korrelationen steuert, die von den Sendestationen empfangenen Signale auf eine einheitliche Zeitbasis synchronisiert. Auf diese Weise lässt sich die Zuordnung von Sendestationen zu Korrelatoren zeitlich derart optimieren, dass kein Korrelator bei einer Zuordnung zu einer anderen Sendestation auf Signale der neuen Sendestation warten muss.

Von Vorteil ist es, wenn mittels der Korrelatoren und der Signale der Sendestationen ein Leistungsverzögerungsprofil für jede Sendestation bestimmt wird. Mittels der Leistungsverzögerungsprofile werden die jeweiligen wesentlichen Ausbreitungswege der Signale der Sendestationen und die zugehörigen Verzögerungszeiten bestimmt. Mit den so ermittelten Verzögerungszeiten lassen sich bei einem CDMA-System, bei dem Daten über die Signale mit Spreizcodes gespreizt übertragen werden, die von den Sendestationen empfangenen Daten optimal entspreizen.

Die Empfangsstation weist alle erforderlichen Merkmale auf, die zur Durchführung des erfindungsgemäßen Verfahrens erforderlich sind.

Die Erfindung wird im Folgenden anhand von in den Figuren dargestellten Ausführungsbeispielen näher erläutert. Es zeigen:
Fig. 1 ein Beispiel für ein geschätztes Leistungsverzögerungsprofil,
Fig. 2 ein erfindungsgemäßes Mobilfunksystem, das exemplarisch die Übertragung von Signalen dreier Sendestationen an eine Empfangsstation zeigt,
Fig. 3 eine Synchronisation von Symbolen zweier Sendestationen in einer Empfangsstation,
Fig. 4 einen ersten zeitlichen Ablauf der Zuordnung von Korrelatoren zu Signalen von Sendestationen,
Fig. 5 einen zweiten exemplarischen zeitlichen Ablauf der Zuordnung von Korrelatoren zu Signalen von Sendestationen und
Fig. 6 einen dritten exemplarischen zeitlichen Ablauf der Zuordnung von Korrelatoren zu Signalen von Sendestationen.

Obwohl die Erfindung im Folgenden anhand eines FDD-UMTS-Systems beschrieben wird, ist sie nicht darauf beschränkt und lässt sich in beliebigen CDMA- oder FDMA-Mobilfunksystemen und sogar in beliebigen Funksystemen verwenden. Ebenfalls einsetzbar ist die Erfindung auch in Adhoc-Netzen.

Gleiche Bezugszeichen in den Figuren bezeichnen gleiche Gegenstände.

Auf das in Figur 1 schematisch dargestellte Leistungsverzögerungsprofil wurde bereits oben Bezug genommen.

Figur 2 zeigt schematisch drei Sendestationen MS1, MS2, MS3 (Mobilstationen), die Signale S1, S2, S3, an eine Empfangsstation BS (Basisstation) übermitteln. Umgekehrt kann allerdings auch eine Mobilstation von mehreren Basisstationen Signale erhalten. Dieser Fall tritt beispielsweise während eines Handover ein.

Die Signale S1, S2, S3 sind jeweils mit einem teilnehmerspezifischen Code C1, C2, C3 gespreizt. Dies ist durch die Bezugszeichen C1, C2, C3, die in Klammern hinter den Bezugszeichen der Signale S1, S2, S3 stehen, gekennzeichnet. In der Empfangsstation BS sitzen eine Empfangseinheit SE, eine erste Korrelatoreinheit KO1 und eine zweite Korrelatoreinheit KO2, eine Datenverarbeitungseinheit DV und eine Steuereinheit ST. In der ersten Korrelatoreinheit KO1 befinden sich zwei Korrelatoren K1, K2 und in der zweiten Korrelatoreinheit K02 befindet sich ein Korrelator K. Die Steuereinheit ST steuert die Verteilungen der Signale S1, S2, S3 der Sendestationen auf die Korrelatoreinheiten KO1, KO2 und die in den Korrelatoreinheiten KO1, KO2 befindlichen Korrelatoren K1, K2, K.

Ein teilnehmerspezifischer Code ist beispielsweise ein Verwürflungscode oder ein Spreizcode oder ein Produkt aus Spreizcode und Verwürflungscode oder ein beliebiger Code, mit dem Teilnehmersignale codiert werden, um sie voneinander zu unterscheiden.

Signale S1, S2, die die Empfangsstation BS von einer ersten Sendestation MS1 und einer zweiten Sendestation MS2 erhalten hat, werden von der Empfangseinheit SE an die erste Korrelatoreinheit KO1 weitergegeben und von der Steuereinheit ST den in der ersten Korrelatoreinheit KO1 befindlichen Korrelatoren K1, K2 zugeordnet. Signale S3 , die die Empfangseinheit von einer dritten Sendestation MS3 erhält, werden an die zweite Korrelatoreinheit KO2 übergeben und von der Steuereinheit ST dem in der zweiten Korrelatoreinheit KO2 befindlichen Korrelator K3 zugeordnet. Die Signale S1, S2 der ersten und zweiten Sendestation MS1, MS2 teilen sich somit die Korrelatoren K1, K2 der ersten Korrelatoreinheit KO1, während die zweite Korrelatoreinheit K02 allein den Signalen S3 der dritten Sendeeinheit MS3 zur Verfügung steht. Die Korrelatoren K1, K2 der ersten Korrelatoreinheit KO1 werden entweder ausschließlich den Signalen S1 der ersten Sendestation MS1, ausschließlich den Signalen S2 der zweiten Sendestation MS2 oder beiden Signalen S1, S2 gleichzeitig zugeordnet. In den Korrelatoreinheiten KO1, KO2 werden die Signale S1, S2, S3 in den ihnen zugewiesenen Korrelatoren K1, K2, K mit dem teilnehmerspezifischen Code C1, C2, C3 der jeweiligen Sendestation MS1, MS2, MS3 korreliert, d. h. multipliziert, wobei jeder einzelne Korrelator eine bestimmte Verzögerungszeit für den entsprechenden Code C1, C2, C3 verwendet. Je nachdem um welche Art von teilnehmerspezifischen Code es sich handelt, spricht der Fachmann anstelle von Korrelationen bzw. Multiplikationen auch von Entwürflung, Entspreizung oder allgemein von Dekodierung.

Für jede Sendestation MS1, MS2, MS3 wird von der jeweiligen Korrelatoreinheit KO1, KO2, der die Signale dieser Sendestation MS1, MS2, MS3 zugeordnet sind, ein Leistungsverzögerungsprofil erstellt. Hierzu werden für jede Sendestation von einem oder mehreren Korrelatoren, innerhalb eines durch eine mehrere Verzögerungszeiten gebildeten Suchfensters, für jede Verzögerungszeit mehrere Korrelationen durchgeführt und jeweils ein Wert für die Empfangsleistung des korrelierten Signals ermittelt. Die für einen Code wählbaren Verzögerungszeiten reichen dabei von 0 Sekunden bis zur Dauer des Codes bzw. von 0 Chips bis N-1 Chips, wobei N die Anzahl der Chips des Codes ist. Eine Verzögerung des Codes um N Chips entspricht wieder dem ursprünglichen, unverzögerten Code.

Die Leistungsverzögerungsprofile PDP1, PDP2, PDP3 der Sendestationen MS1, MS2, MS3 werden von den Korrelatoreinheiten KO1, KO2 an die Datenverarbeitungseinheit DV übermittelt. In der Datenverarbeitungseinheit DV werden diejenigen Verzögerungszeiten für jedes Leistungsverzögerungsprofil PDP1, PDP2, PDP3 ermittelt, die den wesentlichen Ausbreitungswegen der Signale der Sendestationen MS1, MS2, MS3 entsprechen. Die ermittelten Verzögerungszeiten werden Dekodierfingern eines nicht dargestellten Dekodierers mitgeteilt, der diese Information dazu verwendet, empfangene Daten mit den entsprechenden Verzögerungszeiten zu dekodieren. Jeder Dekodierfinger verwendet dazu die Verzögerungszeit eines der wesentlichen Ausbreitungswege.

Selbstverständlich können die Korrelatoreinheiten KO1, KO2 die Ergebnisse der jeweils durchgeführten Korrelationen auch direkt an die Datenverarbeitungseinrichtung DV übermitteln, so dass die Leistungsverzögerungsprofile in der Datenverarbeitungseinheit DV erstellt werden.

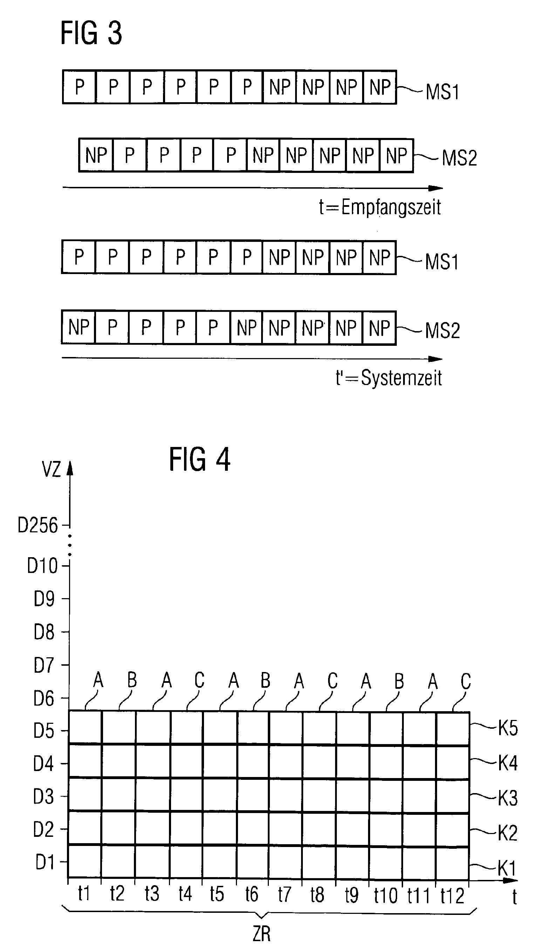

Wie in Figur 3 schematisch dargestellt, bestehen die Signale S1, S2 der Sendestationen MS1, MS2 aus einzelnen Symbolen P, NP. Verwendet werden zur Leistungsprofilerstellung Symbole P, NP, die die Sendestationen MS1, MS2 auf dem Dedicated Physical Control Channel (DPCCH) an die Empfangsstation BS gesendet haben. Es handelt sich dabei sowohl um Pilotsymbole P als auch um Nicht-Pilotsymbole NP.

Da die Sendestationen MS1, MS2 nicht synchron senden, treffen die einzelnen Symbole P, NP zu unterschiedlichen Zeiten an der Empfangsstation BS ein. In Figur 3 gibt die obere Zeitachse t den Zeitpunkt des Eintreffens von Symbolen P, NP der ersten und zweiten Sendestation MS1, MS2 bei der Empfangsstation BS an. In der Empfangsstation BS werden die Symbole N, NP der Sendestationen MS1, MS2 mindestens für die Dauer eines Symbols gespeichert und synchron an die Korrelatoren übergeben. Die untere Zeitachse t' entspricht dabei der Systemzeit der Steuereinheit ST. Die Steuereinheit ST kann dadurch die Symbole N, NP der Sendestationen MS1, MS2 einzelnen Korrelatoren der ersten Korrelatoreinheit KO1 so zuweisen, dass für einen Korrelator ein Wechsel zwischen Symbolen der beiden Sendestationen MS1, MS2 erfolgt, ohne dass der Korrelator auf Symbole N, NP warten muss. Die Speicherung der Symbole kann dabei sowohl in der Empfangseinheit SE als auch in der ersten Korrelatoreinheit KO1 erfolgen.

In Figur 4 ist schematisch ein erster erfindungsgemäßer zeitlicher Ablauf von Korrelationen, d. h. Multiplikationen, dargestellt. In diesem Ausführungsbeispiel verarbeitet die erste Korrelatoreinheit KO1 Signale von drei Sendestationen A, B, C und verfügt über fünf Korrelatoren K1, K2, K3, K4, K5. Jedes Quadrat entspricht dabei einem der Korrelatoren K1, K2, K3, K4, K5 während eines Zeitintervalls mit einer für die jeweilige Korrelation verwendeten Verzögerungszeit D1, D2, D3, D4, D5. So sind die fünf Korrelatoren K1, K2, K3, K4, K5 während des Zeitintervalls t1 einer ersten Sendestation A zugeordnet und jeder der Korrelatoren K1, K2, K3, K4, K5 verwendet eine Verzögerungszeit D1, D2, D3, D4, D5. Andere Verzögerungszeiten D6, D7, D8, D9, D10 werden nicht von den Korrelatoren K1, K2, K3, K4, K5 verwendet. Während des Zeitintervalls t2 sind die fünf Korrelatoren K1, K2, K3, K4, K5 mit den gleichen Verzögerungszeiten D1, D2, D3, D4, D5 wie im vorherigen Zeitintervall t1 einer zweiten Sendestation B zugeordnet. Während des Zeitintervalls t3 sind die Korrelatoren wieder der ersten Sendestation A zugeordnet und während des Zeitintervalls t4 einer dritten Sendestation C. Im Zeitintervall t5 erfolgen die Korrelationen wieder für die erste Sendestation A. Die Zuordnung der Korrelatoren zu den Sendestationen A, B, C erfolgt zyklisch. Ein Korrelator, der ersten Korrelatoreinheit KO1 wird somit in diesem Ausführungsbeispiel von drei Sendestationen A, B, C im Zeitmultiplex verwendet. Die Dauer der Zuordnung der Korrelatoren zu einer Sendestation A, B, C, d. h. die Länge eines Zeitintervalls t1, ..., t12 entspricht dabei der Breite eines Quadrats und ist üblicherweise so lang wie ein Symbol N, NP. Selbstverständlich kann die Korrelationsdauer auch länger oder kürzer als die Dauer eines Symbols N, NP sein.

Obwohl in Figur 4 alle Zeitintervalle t1, ..., t12 gleich lang dargestellt sind, d. h. die fünf Korrelatoren K1, K2, K3, K4, K5 allen Sendestationen A, B, C jeweils für die gleiche Intervalldauer zur Verfügung stehen, können Zeitintervalle t1, ..., t10 selbstverständlich auch unterschiedlich lang sein, so dass verschiedene Sendestationen A, B, C die Korrelatoren für verschiedene Zeiträume nutzen. Weiterhin werden in diesem Ausführungsbeispiel für alle Sendestationen A, B, C die gleichen Verzögerungszeiten D1, D2, D3, D4, D5 verwendet, selbstverständlich können für verschiedene Sendestationen A, B, C auch unterschiedliche Verzögerungszeiten D1, ..., D256 verwendet werden. Bei einer Länge eines teilnehmerspezifischen Codes von beispielsweise 256 Chips können Korrelationen beispielsweise für 256 verschiedene Verzögerungszeiten D1, ..., D256 vorgenommen werden. Benachbarte Verzögerungszeiten unterscheiden sich dabei jeweils durch die Verschiebung des Codes um einen Chip. Der Abstand benachbarter Verzögerungszeiten kann selbstverständlich auch ein beliebiges ganzzahliges oder nicht ganzzahliges Vielfaches eines Chips sein und kann daher insbesondere auch kleiner als ein Chip sein.

Selbstverständlich können auch für eine einzelne Sendestation A, B, C in jedem zugewiesenen Zeitintervall t1, ..., t12 beliebige Verzögerungszeiten für die Korrelationen gewählt werden.

Für Sendestationen, die sich mit sehr hohen Geschwindigkeiten bewegen, ändern sich die Ausbreitungsbedingungen sehr schnell. Für diese Sendestationen ist es erforderlich, ein Leistungsverzögerungsprofil häufiger zu erstellen als für Sendestationen, die ruhen oder sich nur sehr langsam bewegen. Auch für Sendestationen deren Sendesignale mit einem großen Frequenzunterschied empfangen werden, muss ein Leistungsverzögerungsprofil häufiger erstellt werden. Dies resultiert daraus, dass die Symbollänge von Sendestationen mit großem Frequenzunterschied und die Symbollänge der Empfangsstation nicht exakt übereinstimmen und sich daher die Form des Leistungsverzögerungsprofils schneller ändert als bei Sendestationen mit einem kleinen bzw. keinem Frequenzunterschied. In einer bevorzugten Ausgestaltung der Erfindung hängt daher die Anzahl von Korrelationen innerhalb eines Zeitraumes ZR, d. h. während der Dauer mehrerer Zeitintervalle, von der Geschwindigkeit bzw. dem Frequenzunterschied der jeweiligen Sendestation ab. Je größer die Geschwindigkeit bzw. der Frequenzunterschied einer Sendestation ist desto mehr Korrelatoren einer Korrelatoreinheit werden der Sendestation während eines einzelnes Zeitintervall zugewiesen. Alternativ oder zusätzlich wird für schnelle Sendestationen bzw. Sendestationen mit großem Frequenzunterschied der Abstand zwischen Zeitintervallen, die einer Sendestation zugeordnet sind verringert, d. h. diesen Sendestationen werden innerhalb eines Zeitraumes ZR mehr Zeitintervalle zugewiesen als langsamen Sendestationen bzw. Sendestationen mit einem geringen Frequenzunterschied.

In Figur 4 hat die erste Sendestation A eine sehr hohe Geschwindigkeit, die sehr viel höher ist als die Geschwindigkeit der beiden anderen Sendestationen B, C, und erhält daher die Korrelatoren K1, K2, K3, K4, K5 der ersten Korrelatoreinheit KO1 während jedes zweiten Zeitintervalls t1, t3, t5, t7, t9, t11. Im dargestellten Zeitraum ZR von zwölf Zeitintervallen t1, ..., t12 sind die Korrelatoren K1, K2, K3, K4, K5 der ersten Sendestation A doppelt so lange zugeordnet wie jeweils einer der beiden anderen Sendestationen B, C.

Die Geschwindigkeit und der Frequenzunterschied der Sendestationen A, B, C sind der Steuereinheit ST beispielsweise aus einer, der Zuordnung der Korrelatoren K1, K2, K3, K4, K5 zu den Signalen der Sendestationen A, B, C vorausgehenden, Messung bekannt und werden regelmäßig neu bestimmt.

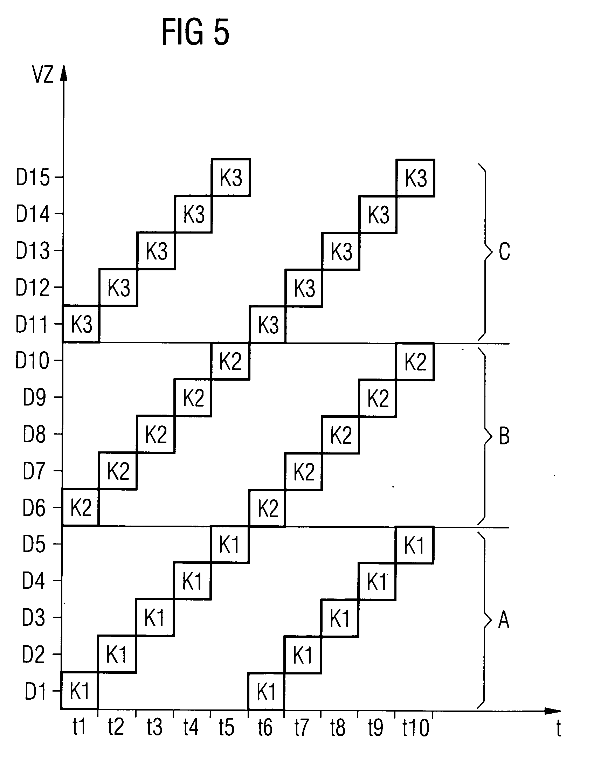

Figur 5 zeigt schematisch einen zweiten zeitlichen Ablauf der Zuordnung von Korrelatoren K1, K2, K3 der ersten Korrelatoreinheit KO1 zu den drei Sendestationen A, B, C, wobei die erste Korrelatoreinheit KO1 in diesem Fall drei Korrelatoren K1, K2, K3 enthält, d. h. drei Korrelationen zeitgleich durchführen kann. Während des Zeitintervalls t1 ist der ersten Sendestation A ein erster Korrelator K1 mit einer Verzögerungszeit D1 zugeordnet, der zweiten Sendestation B ein zweiter Korrelator K2 mit einer Verzögerungszeit D6 und der dritten Sendestation C ein dritter Korrelator K3 mit einer Verzögerungszeit D11 zugeordnet. Im Zeitintervall t2 bleibt die Zuordnung der Sendestationen zu den Korrelatoren K1, K2, K3 erhalten, jedoch ändert sich die Verzögerungszeit, die der jeweilige Korrelator verwendet. Der erste Korrelator K1 der ersten Sendestation A hat eine neue Verzögerungszeit D2, der zweite Korrelator K2 der zweiten Sendestation B hat eine neue Verzögerungszeit D7 und der dritte Korrelator K3 der dritten Sendestation C hat eine neue Verzögerungszeit D12. Während der ersten fünf Zeitintervalle t1, ..., t5 werden für jede der drei Sendestationen A, B, C für unterschiedliche Verzögerungszeiten D1, ..., D15 Korrelationen durchgeführt. Danach beginnen die von den Korrelatoren K1, K2, K3 verwendeten Verzögerungszeiten wieder bei ihrem jeweiligen Startwert D1, D6, D11. Die Korrelationen werden gemäß diesem Schema wiederholt, bis eine Änderung in der Zuweisung der Korrelatoren und/oder Verzögerungszeiten zu den Signalen der Sendestationen erfolgt.

Zur Erstellung eines Leistungsverzögerungsprofils für die jeweilige Sendestation A, B, C werden die Ergebnisse der Korrelationen, die während unterschiedlicher Zeitintervalle aber mit der gleichen Verzögerungszeit für die gleiche Sendestation gemessen wurden, inkohärent aufsummiert. Für die erste Sendestation A sind dies für die Verzögerungszeit D1 die Ergebnisse der Korrelationen während der Zeitintervalle t1 und t6.

Innerhalb eines dieser Zeitintervalle t1, t6 wird für jedes von der ersten Sendestation A empfangene Symbol eine Korrelation durchgeführt und die Einzelergebnisse der Korrelationen werden während der Dauer eines Zeitintervalls t1, t6 kohärent addiert. Werden viele Symbole während eines Zeitintervalls empfangen, z. B. während eines sehr langen Zeitintervalls, so können die Einzelergebnisse nicht über das gesamte Zeitintervall kohärent addiert werden. Das Zeitintervall wird daher in Teilintervalle unterteilt während derer die Einzelergebnisse jeweils kohärent addiert werden können. Die kohärenten Summen der Teilintervalle werden dann inkohärent zu einer Teilsumme für jedes Zeitintervall addiert. Aus den Teilsummen der ZeitIntervalle t1, t6 wird durch inkohärente Addition eine Gesamtsumme gebildet. Aus der für die jeweilige Verzögerungszeit bestimmten Gesamtsumme ergibt sich schließlich für jede Sendestation A, B, C in dem betrachteten Suchfenster, d.h. für die jeweils für Korrelationen verwendeten Verzögerungszeiten, ein Leistungsverzögerungsprofil. Für die erste Sendestation A ergibt sich ein Leistungsverzögerungsprofil in einem Suchfenster mit den Verzögerungszeiten D1 bis D5 für die zweite Sendestation B in einem Suchfenster mit den Verzögerungszeiten D6 bis D10 und für die dritte Sendestation C in einem Suchfenster mit den Verzögerungszeiten D11 bis D15. Durch Optimierung der Dauer der Zeitintervalle und der Teilintervalle in denen kohärent bzw. inkohärent addiert wird, wird die Qualität der Leistungsverzögerungsprofile verbessert.

Die kohärente und inkohärente Summation von einzelnen Korrelationen wird bereits von Verfahren verwendet, die kontinuierlich mit individuell zugeordneten Korrelatoren für jeweils eine Sendestation ein Leistungsverzögerungsprofil bestimmen. Durch das Zeitmultiplexverfahren der Erfindung werden allerdings nicht nur Korrelatoren eingespart sondern auch der Speicherbedarf für die kohärenten Summen reduziert. Der Speicher für kohärente Summen wird nur während eines Zeitintervalls benötigt und ist daher kleiner als bei einer kontinuierlichen Summation. Dies ergibt sich daraus, dass ein einzelnes Zeitintervall kürzer ist als die Dauer einer kontinuierlichen Messung zur Erstellung eines Leistungsverzögerungsprofils, so dass die Anzahl der kohärenten Summen, die in einem Zeitintervall gebildet werden können, kleiner ist als die Anzahl der kohärenten Summen während einer kontinuierlichen Summation. Im Ausführungsbeispiel von Figur 5 wird für jede Sendestation A, B, C nur jeweils ein Speicher für kohärente Summen benötigt, der in jedem Zeitintervall erneut beschrieben wird.

In den Ausführungsbeispielen zu den Figuren 4 und 5 wurde immer ein Suchfenster von fünf Verzögerungszeiten für jede Sendestation gewählt. Selbstverständlich können auch andere Suchfenstergrößen gewählt werden, die größer oder kleiner als diese Breite sind. Ebenso können die Suchfenster der Verzögerungszeiten in Figur 5 für die drei Sendestationen A, B, C teilweise oder auch ganz überlappen.

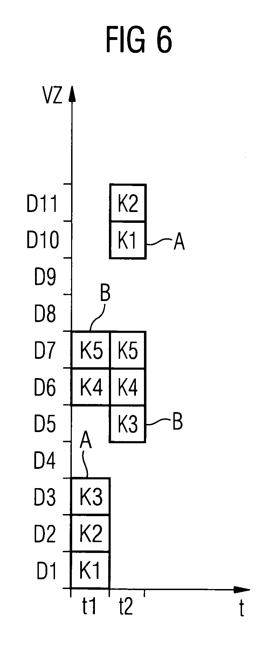

Eine bevorzugte Ausgestaltung der Erfindung besteht in einer gleichzeitigen Anwendung der zeitlichen Zuordnung von Korrelatoren zu Signalen der Sendestationen wie sie für die Figuren 4 und 5 beschrieben wurde. So werden in Figur 6 während eines ersten Zeitintervalls t1 der ersten Sendestation A drei Korrelatoren K1, K2, K3 von fünf Korrelatoren K1, K2, K3, K4, K5 mit jeweils unterschiedlichen Verzögerungszeiten D1, D2, D3 zugeordnet und gleichzeitig die beiden anderen Korrelatoren K4, K5 der zweiten Sendestation B mit anderen Verzögerungszeiten D6, D7 zugeordnet. Im folgenden Zeitintervall t2 werden dann der ersten Sendestation A nur noch zwei Korrelatoren K1, K2 der ursprünglich zugeordneten Korrelatoren K1, K2, K3 mit einer jeweils geänderten Verzögerungszeit D10, D11 zugewiesen während der zweiten Sendestation B nun zusätzlich der Korrelator K3 zugeordnet wird, den zuvor die erste Sendestation A verwendet hat. Die bereits im ersten Zeitintervall t1 der zweiten Sendestation B zugeordneten zwei Korrelatoren K4, K5 verwenden im folgenden Zeitintervall t2 noch die gleiche Verzögerungszeit D6, D7, während der neu zugeordnete Korrelator K3 eine völlig neue Verzögerungszeit D5 hat als zuvor für die erste Sendestation A verwendet wurde.

## Patentansprüche

1. Verfahren zur Auswertung von Signalen in einer Empfangsstation eines Funksystems, bei dem
- die Empfangsstation (BS) die Signale (S1, S2) zeitlich überlappend von wenigstens einer ersten und einer zweiten Sendestation (MS1, MS2; A, B, C) empfängt,
- die Signale (S1, S2) der Sendestationen (MS1, MS2; A, B, C) sich durch unterschiedliche Codes (C1, C2) unterscheiden,
- in der Empfangsstation (BS) wenigstens einem Korrelator (K1, K2, K3, K4, K5) die Signale (S1) der ersten Sendestation (MS1; A) zugeordnet werden,
- der Korrelator (K1, K2, K2, K3, K4, K5) die Signale (S1) der ersten Sendestation (MS1; A) mit dem Code (C1) der ersten Sendestation (MS1; A) unter Verwendung einer bestimmten Verzögerungszeit (D1, D2, D3, ..., D256) korreliert,
- und der Korrelator (K1, K2, K2, K3, K4, K5) für die Durchführung einer weiteren Korrelation den Signalen (S2) der zweiten Sendestation (MS2; B, C) zugeordnet wird und/oder die vom Korrelator (K1, K2, K2, K3, K4, K5) verwendete Verzögerungszeit (D1, D2, D3, ..., D256) geändert wird, während weiterhin die Signale (S1) der ersten Sendestation (MS1; A) empfangen werden.

2. Verfahren nach Anspruch 1, bei dem
mehrere Korrelationen für die Signale (S1, S2) wenigstens einer der Sendestationen (MS1, MS2, A, B, C) innerhalb eines vorgegebenen Zeitraumes (ZR) durchgeführt werden und die Anzahl an Korrelationen von der Geschwindigkeit der Sendestation (MS1, MS2; A, B, C) und/oder dem Frequenzunterschied zwischen der Sendestation (MS1, MS2; A, B, C) und der Empfangsstation (BS) abhängt.

3. Verfahren nach Anspruch 2, bei dem
zur Festlegung der Anzahl an Korrelationen innerhalb des vorgegebenen Zeitraumes (ZR) eine Anzahl an Korrelatoren (K1, K2, K3, K4, K5) festgelegt wird, denen die Signale der Sendestation zugeordnet werden.

4. Verfahren nach Anspruch 2 oder 3, bei dem
zur Festlegung der Anzahl an Korrelationen innerhalb des vorgegebenen Zeitraumes (ZR) der zeitliche Abstand zwischen Korrelationen festgelegt wird, die ein Korrelator (K1, K2, K3, K4, K5) für die Signale der Sendestation durchführt.

5. Verfahren nach einem der vorstehenden Ansprüche, bei dem mehrere Korrelatoren (K1, K2, K3, K4, K5) verwendet werden und die zeitlich überlappend empfangenen Signale (S1, S2) der Sendestationen (MS1, MS2; A, B, C) gespeichert und den Korrelatoren (K1, K2, K3, K4, K5) synchron zugeführt werden.

6. Verfahren nach einem der vorstehenden Ansprüche, bei dem mittels der Korrelatoren (K1, K2, K3, K4, K5) und der Signale (S1, S2) der Sendestationen (MS1, MS2; A, B, C) ein Leistungsverzögerungsprofil für jede Sendestation (MS1, MS2; A, B, C) bestimmt wird.

7. Empfangsstation (BS) zur Auswertung von sich zeitlich überlappenden Signalen (S1, S2) wenigstens einer ersten und einer zweiten Sendestation (MS1, MS2; A, B, C), wobei sich die Signale (S1, S2) der Sendestationen (MS1, MS2; A, B, C) durch unterschiedliche Codes (C1, C2) unterscheiden,
- mit wenigstens einem Korrelator (K1, K2, K3, K4, K5),
- mit einer Steuereinheit (ST) zum Zuordnen der Signale (S1) der ersten Sendestation (MS1; A) zu dem wenigstens einen Korrelator (K1, K2, K3, K4, K5),
- deren Korrelator (K1, K2, K3, K4, K5) so ausgebildet ist, dass er die Signale (S1) der ersten Sendestation (MS1; A) mit dem Code (C1) der ersten Sendestation (MS1; A) unter Verwendung einer bestimmten Verzögerungszeit (D1, D2, D3, ..., D256) korreliert,
- und deren Steuereinheit (ST) so ausgebildet ist, dass sie den Korrelator (K1, K2, K3, K4, K5) für die Durchführung einer weiteren Korrelation den Signalen (S2) der zweiten Sendestation (MS2; B, C) zuordnet und/oder die vom Korrelator (K1, K2, K3, K4, K5) verwendete Verzögerungszeit (D1, D2, D3, ..., D256) ändert, während weiterhin die Signale (S1) der ersten Sendestation (MS1; A) empfangen werden.
